# EUROPEAN PATENT SPECIFICATION

(11) **EP 4 465 496 B1**
(45) Date of publication and mention of the grant of the patent: **28.01.2026**
(21) Application number: 23207007.8
(22) Date of filing: 31.10.2023
(51) Int. Cl.: H02K 1/32, H02K 9/19, H02K 7/04, H02K 15/16, H02K 1/276

(54) **BALANCING DISK FOR MOTOR, ROTOR ASSEMBLY, MOTOR AND VEHICLE**
AUSGLEICHSSCHEIBE FÜR EINEN MOTOR, ROTORANORDNUNG, MOTOR UND FAHRZEUG
DISQUE D'ÉQUILIBRAGE POUR MOTEUR, ENSEMBLE ROTOR, MOTEUR ET VÉHICULE

(30) Priority: 17.05.2023 CN 202310558768
(43) Date of publication of application: 20.11.2024
(73) Proprietor: Xiaomi EV Technology Co., Ltd., Beijing 100176 (CN)
(72) Inventor: LUO, Xuan, Beijing 100176 (CN)
(74) Representative: Stöckeler, Ferdinand

(56) References cited:
- CN-A- 115 347 729
- CN-A- 115 459 493
- CN-U- 213 243 761
- CN-U- 215 897 411
- CN-U- 216 851 493
- CN-U- 217 063 503

## Description

### FIELD

The present invention relates to the field of motor technology, and particularly to a balancing disk for a motor, a rotor assembly, a motor and a vehicle.

### BACKGROUND

In the related art, an oil cooling of motors is generally designed to employ oil that runs through a rotor assembly of the motor. The mainstream solution is to provide an oil channel in a rotating shaft, and the oil is sprayed to a stator winding from a balancing disk through an oil path formed by the balancing disk and an iron core, to complete cooling of the rotor assembly.

CN215897411U belongs to the field of motor heat dissipation, and particularly relates to a motor heat dissipation structure, which includes a rotor, a hollow rotating shaft and two oil guide plates, the oil guide plates are respectively and tightly attached to the side surface of the rotor and the circumferential surface of the hollow rotating shaft, oil outlet holes are arranged on the oil guide plates in a penetrating manner, and oil guide grooves connected with inner rings of the oil guide plates are arranged on one side close to the rotor. The rotor is provided with a cooling hole, the two ends of the cooling hole correspond to the oil guide grooves and the oil outlet holes of the two oil guide plates respectively, and the hollow rotating shaft is provided with oil inlet holes communicated with the oil guide grooves. The oil guide plate is arranged on one side of the rotor and moves to the oil outlet hole of the oil guide plate on the other side along the cooling hole of the rotor in the single direction to be sprayed into the motor, heat dissipation can be effectively carried out on the area nearby a rotor permanent magnet of the motor, the excitation loss risk of the permanent magnet is reduced, and after heat dissipation is carried out on the interior of the rotor, the oil is directly sprayed to the stator winding end in the motor through the oil outlet hole. And hot spot direct cooling is realized.

CN217063503U belongs to the technical field of vehicle accessories, and particularly provides a motor for a vehicle and the vehicle. The utility model aims to solve the problem that the cooling effect of the inner side of the circumference of the winding end part and the local part of the rotor of the existing motor for the vehicle is relatively poor. In order to achieve the purpose, the motor for the vehicle includes a rotor, the rotor includes a rotor shaft and a rotor iron core, a hollow cavity is formed in the rotor shaft, an oil guide hole is further formed in the rotor shaft, the hollow cavity is communicated with the oil guide hole to form a first cooling oil way, and the rotor iron core is arranged outside the rotor shaft in a sleeving mode. A first oil groove is further formed in the outer side of the rotor shaft or the inner side of the rotor iron core, a second cooling oil way is defined by the rotor shaft and the rotor iron core through the first oil groove, the first cooling oil way is communicated with the first end of the second cooling oil way through an oil guide hole, and the second end of the second cooling oil way is communicated with the outside. Therefore, cooling oil can flow through the interiors of the rotor shaft and the rotor iron core, so that the cooling effect of the rotor is improved.

### SUMMARY

In order to solve the problems in the related art, the present invention provides a balancing disk for a motor according to claim 1, a rotor assembly according to claim 12, a motor according to claim 14 and a vehicle according to claim 15.

According to a first aspect of the present invention, there is provided a balancing disk for a motor. The balancing disk includes an oil discharge port, and a first end face and a second end face opposite to each other; and the first end face is configured to fit on an end face of a rotor core, the second end face has an annular groove, and the oil discharge port is communicated with the first end face and the annular groove, to enable oil flowing out of the oil discharge port to be discharged through the annular groove. A size of the oil discharge port gradually increases from an inlet end to an outlet end of the oil discharge port

Optionally, the annular groove is arranged around a rotation axis of the balancing disk; the annular groove has a first sidewall and a second sidewall spaced apart from each other, and a bottom wall located between the first sidewall and the second sidewall, the first sidewall is located outside the second sidewall in a radial direction of the balancing disk, and a radial distance between an end of the first sidewall close to the bottom wall and the rotation axis is a first distance; an outlet end of the oil discharge port extends to the bottom wall, and a radial distance between a third sidewall located at an outermost side in the radial direction of the balancing disk in the oil discharge port and the rotation axis is a second distance; and the first distance is greater than or equal to the second distance.

Optionally, the bottom wall is parallel to the first end face; and an angle between the first sidewall and the bottom wall is greater than or equal to 90 degrees.

Optionally, a first projection of the first sidewall on the first end face is a circle, and the third sidewall in the oil discharge port is an arc-shaped sidewall; and the third sidewall is flush with the first sidewall in the radial direction of the balancing disk.

Optionally, the balancing disk includes a plurality of oil discharge ports, and the plurality of oil discharge ports is arranged at equal angular intervals in a circumferential direction around a rotation axis of the balancing disk.

Optionally, the annular groove is located in a middle of the balancing disk in a radial direction of the balancing disk, or the annular groove is located near an outer circumference of the balancing disk in the radial direction of the balancing disk.

Optionally, the balancing disk further includes a first oil discharge groove and a first mounting hole configured for a rotating shaft of the motor to pass through, and a central axis of the first mounting hole is the rotation axis of the balancing disk; and the first oil discharge groove is located on the first end face of the balancing disk and extends in the radial direction of the balancing disk, the first oil discharge groove has an inner end communicated with the first mounting hole, and an outer end configured to be communicated with an axial through hole located on the end face of the rotor core.

Optionally, a plurality of first oil discharge grooves and a plurality of oil discharge ports are provided in an equal number, the plurality of first oil discharge grooves and the plurality of oil discharge ports are arranged at equal angular intervals in the circumferential direction around the rotation axis, and one oil discharge port is arranged between every two adjacent first oil discharge grooves.

Optionally, the balancing disk further includes a second oil discharge groove, a third oil discharge groove and a first mounting hole configured for a rotating shaft of the motor to pass through, and a central axis of the first mounting hole is the rotation axis of the balancing disk: the second oil discharge groove is located on the first end face of the balancing disk and extends in the radial direction of the balancing disk, the second oil discharge groove has an inner end communicated with the first mounting hole, and an outer end configured to be communicated with an axial through hole located on the end face of the rotor core; and the third oil discharge groove is located on the first end face of the balancing disk and extends in the radial direction of the balancing disk, the third oil discharge groove has an inner end configured to be communicated with another axial through hole located on the end face of the rotor core, and an outer end communicated with the inlet end of the oil discharge port.

Optionally, a plurality of second oil discharge grooves, a plurality of third oil discharge grooves and a plurality of oil discharge ports are provided in an equal number, and the plurality of third oil discharge grooves is in one-to-one correspondence with the plurality of oil discharge ports in terms of position; and the plurality of second oil discharge grooves and the plurality of third oil discharge grooves are arranged at equal angular intervals in the circumferential direction around the rotation axis, and one second oil discharge groove is arranged between every two adjacent third oil discharge grooves.

Optionally, the balancing disk further includes a fourth oil discharge groove and a first mounting hole configured for a rotating shaft of the motor to pass through, and a central axis of the first mounting hole is the rotation axis of the balancing disk; and the fourth oil discharge groove is located on the first end face of the balancing disk and extends in the radial direction of the balancing disk, the fourth oil discharge groove has an inner end communicated with the first mounting hole, and an outer end communicated with the inlet end of the oil discharge port.

According to a second aspect of embodiments of the present invention, there is provided a rotor assembly, including a rotor core, a rotating shaft and two balancing disk as described above. The two balancing disks and the rotor core are fitted over the rotating shaft, and the two balancing disks are respectively arranged at two ends of the rotor core in an axial direction.

Optionally, an outer sidewall of the oil discharge port has a linear velocity greater than or equal to 120m/s during rotation of the balancing disk.

According to a third aspect of embodiments of the present invention, there is provided a motor, including a rotor assembly as described above.

According to a fourth aspect of embodiments of the present invention, there is provided a vehicle, including a motor as described above.

The technical solutions provided by embodiments of the present invention may include the following beneficial effects.

In the balancing disk provided by the present invention, the annular groove is provided, and the oil (cooling oil) flowing out from the outlet end of the oil discharge port may enter the annular groove. The oil may be dispersed in the annular groove during rotation with the balancing disk around the rotation axis of the balancing disk, to change from an oil beam to an oil film. The oil film is thrown out from the annular groove under the effect of a centrifugal force during the rotation of the balancing disk, and the oil film is atomized and sprayed towards a stator root of the motor under the effect of a high speed, so that a scouring force of the oil may be greatly reduced, reducing a risk of damage caused by scouring of the oil on the stator root, and protecting insulating materials such as impregnating varnish and insulating paper at the stator root, which is beneficial to prolonging service life of the motor.

Furthermore, a problem of damage to the stator of the motor due to increase of the rotating speed of the motor is solved by designing the balancing disk, and thus the rotating speed of the motor may be increased on the premise of protecting the stator, to meet use conditions required for a high rotating speed of the motor.

It is to be understood that both the foregoing general description and the following detailed description are illustrative and explanatory only, and shall not be construed to limit the present invention.

### BRIEF DESCRIPTION OF THE DRAWINGS

The accompanying drawings, which are incorporated in and constitute a part of this specification, illustrate embodiments in line with the present invention and, together with the description, serve to explain the principle of the present invention.
FIG. 1 is a perspective view illustrating a balancing disk according to an embodiment.
FIG. 2 is a perspective view illustrating a balancing disk from another perspective according to an embodiment.
FIG. 3 is a front view illustrating a balancing disk according to an embodiment, in which a second end face of the balancing disk is shown.
FIG. 4 is a schematic cross-sectional view taken along a line A-A in FIG. 3.
FIG. 5 is a schematic cross-sectional view illustrating a balancing disk according to an embodiment.
FIG. 6 is an enlarged schematic view of a part A in FIG. 1, in which a first sidewall and a third sidewall are schematically separated by a dashed line for clarity.
FIG. 7 is a schematic perspective view illustrating a balancing disk according to an embodiment, in which arrows schematically illustrate paths for oil discharge.
FIG. 8 is a schematic perspective view illustrating a balancing disk according to another embodiment, in which arrows schematically illustrate paths for oil discharge.
FIG. 9 is a schematic front view illustrating a balancing disk according to another embodiment, in which a second end face of the balancing disk is shown.
FIG. 10 is a perspective view illustrating a balancing disk from another perspective according to another embodiment.
FIG. 11 is a rear view illustrating a balancing disk according to another embodiment, in which a first end face of the balancing disk is shown.
FIG. 12 is a rear view illustrating a balancing disk according to yet another embodiment, in which a first end face of the balancing disk is shown.
FIG. 13 is a partial structural schematic diagram illustrating a rotor assembly according to another embodiment, in which a rotor core, a rotating shaft and a magnet unit are shown.

### DESCRIPTION OF THE REFERENCE NUMERALS

100- rotor assembly; 10- balancing disk; 11- first end face; 12- second end face; 13-oil discharge port; 131- third sidewall; 14- annular groove; 141- first sidewall; 142- second sidewall; 143- bottom wall; 151- first oil discharge groove; 152- second oil discharge groove; 153- third oil discharge groove; 154- fourth oil discharge groove; 16- first mounting hole; 161- rotation axis; 20-rotor core; 21- axial through hole; 22- end face of rotor core; 30- rotating shaft; 31- oil hole; 40-magnet unit; 41- magnet.

### DETAILED DESCRIPTION

Embodiments will be described in detail herein, examples of which are illustrated in the accompanying drawings. The following description refers to the accompanying drawings in which the same reference numerals in different drawings represent the same or similar elements unless otherwise represented. The implementations set forth in the following description of the embodiments do not represent all possible implementations in line with the present invention. Instead, they are merely examples of devices and methods in line with aspects related to the present invention as recited in the appended claims.

It should be noted that all actions of obtaining signals, information or data in the present invention are performed under premise of complying with corresponding data protection regulations and policies of the country where it is located and obtaining authorization from the owner of a corresponding device.

In the present invention, it should be understood that orientations or positional relationships indicated by orientation terms such as "front", "rear", "left", "right", etc. are the orientations or positional relationships based on the accompanying drawings, and are only for convenience of describing the present invention and simplifying the description, rather than indicate or imply that the device or element referred to must have a specific orientation, configuration and operation in the specific orientation, and therefore should not be construed as a limit on the present invention. Unless stated to the contrary, terms such as "first" and "second" are used only to distinguish one element from another element and do not imply sequence or importance.

In related art, the oil sprayed from the rotor has an increasing scouring force on the stator as a rotating speed increases, so that a scoured part of the stator is damaged. The scoured part of the stator is often an end of the stator, and the part is provided with insulating materials such as impregnating varnish and insulating paper. Service life of the motor will be shortened or terminated in case the part is damaged.

The applicant found that, in the related art, in case the rotating speed of a motor is increased to a certain value, that is, a linear velocity of oil (cooling oil) discharged from an oil discharge port on a rotor core reaches a certain value, a scouring force of the cooling oil will damage a stator of the motor, and service life of the motor is affected.

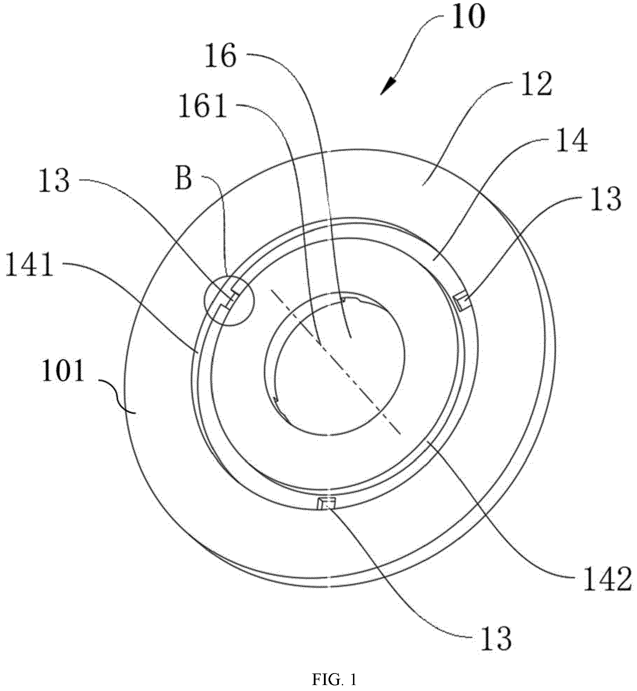

In view of this, as shown in FIGS. 1 to 12, according to a first aspect of the present invention, there is provided a balancing disk 10 for the motor, which may be a high-speed motor. The balancing disk 10 has an oil discharge port 13, and a first end face 11 and a second end face 12 opposite to each other. The first end face 11 is configured to fit on an end face 22 of a rotor core, the second end face 12 includes a recessed region that defines an annular groove 14, and the oil discharge port 13 is communicated with the first end face 11 and the annular groove 14, to enable oil flowing out of the oil discharge port to be discharged through the annular groove 14. In embodiments, oil discharge port 13 is an aperture through balancing disk 10. The aperture is defined by an interior surface of balancing disk 10 that spans between end face 11 and a location of end face 12, such as annular groove 14. In an example, the balancing disk 10 includes a disk body 101, and the disk body 101 has the oil discharge port 13, the first end face 11 and the second end face 12.

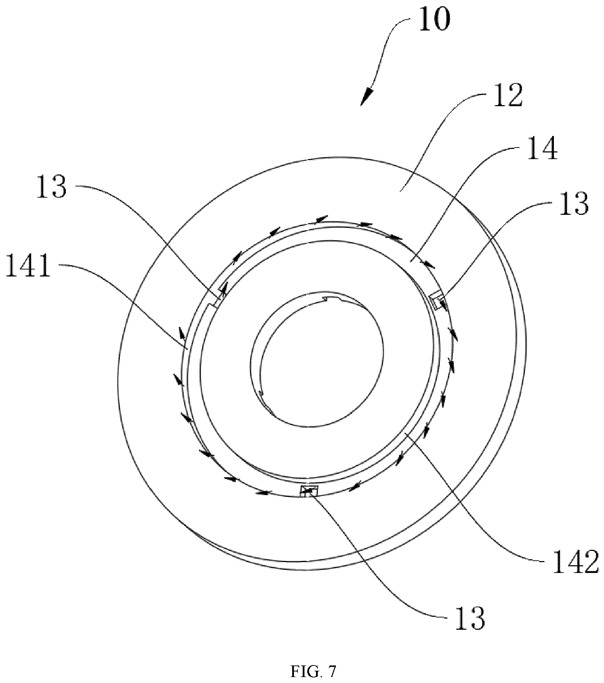

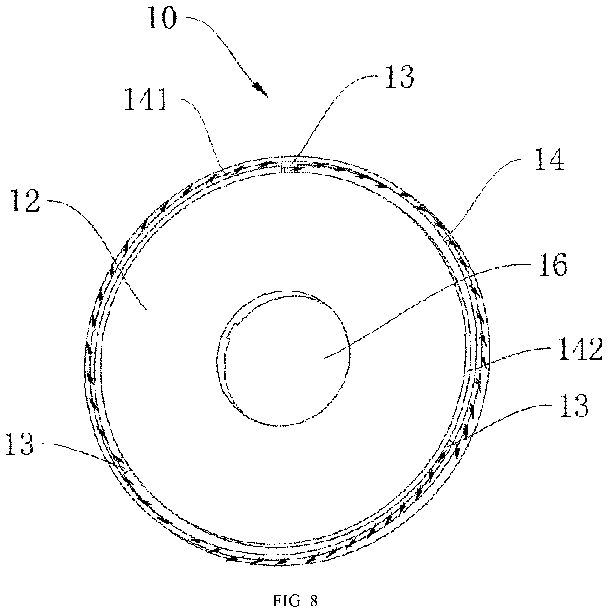

In the balancing disk 10 provided by the present invention, the annular groove 14 is provided, and the oil (the cooling oil) flowing out from an outlet end of the oil discharge port 13 may enter the annular groove 14. The oil may be dispersed in the annular groove 14 during rotation with the balancing disk 10 around a rotation axis of the balancing disk 10, to change from an oil beam to an oil film. The oil film is thrown out from the annular groove 14 (a direction as shown in FIGS. 7 and 8) under the effect of a centrifugal force during rotation of the balancing disk 10, and the oil film is atomized and sprayed towards a stator root of the motor under the effect of a high speed, so that a scouring force of the oil may be greatly reduced, reducing a risk of damage caused by scouring of the oil on the stator root, and protecting insulating materials such as impregnating varnish and insulating paper at the stator root, which is beneficial to prolonging the service life of the motor.

Furthermore, a problem of damage to the stator of the motor due to an increase of the rotating speed of the motor is solved by designing the balancing disk 10, and therefore the rotating speed of the motor may be increased on the premise of protecting the stator, to meet use conditions required for a high rotating speed of the motor.

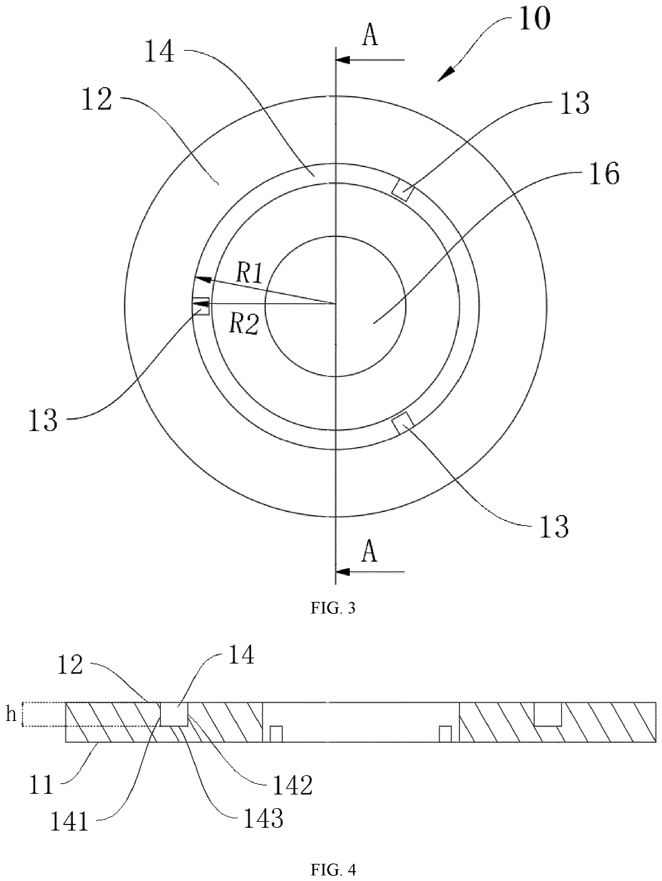

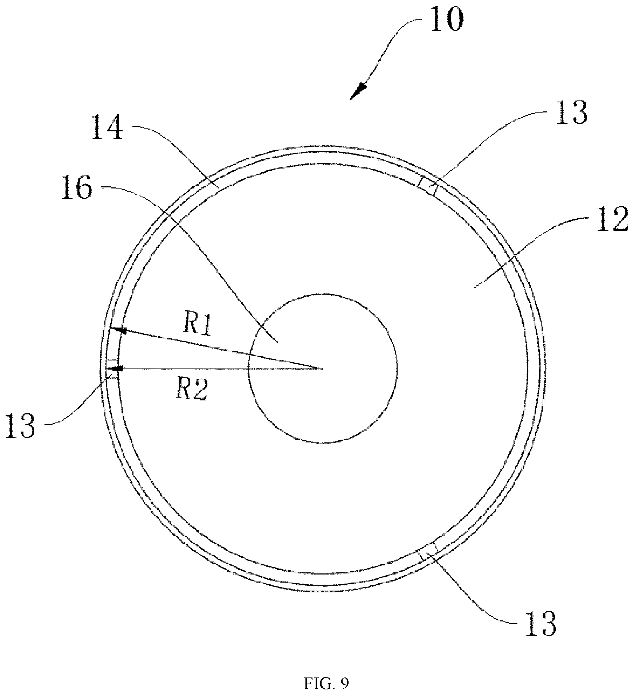

As shown in FIGS. 1 and 8, in some embodiments of the present invention, the annular groove 14 may be arranged around the rotation axis 161 of the balancing disk 10. The annular groove 14 has a first sidewall 141 a second sidewall 142 spaced apart from each other, and a bottom wall 143 located between the first sidewall 141 and the second sidewall 142. The first sidewall 141 is located outside the second sidewall 142 in a radial direction of the balancing disk 10, and a radial distance between an end of the first sidewall 141 close to the bottom wall 143 and the rotation axis 161 is a first distance (e.g. R1 in FIGS. 3 and 9). The outlet end of the oil discharge port 13 extends to the bottom wall 143 to communicate with the annular groove 14, a radial distance between a third sidewall 131 located at an outermost side in the radial direction of the balancing disk 10 in the oil discharge port 13 and the rotation axis 161 is a second distance (e.g. R2 in FIGS. 3 and 9), and the first distance is greater than or equal to the second distance.

In this way, it is possible to make the oil in the oil discharge port 13 enter the annular groove 14 as much as possible, and to avoid a problem that a cooling effect is not ideal and an operation of the rotor core 20 is affected due to accumulation of the oil in a gap between the oil discharge port 13 or the balancing disk 10 and the end face 22 of the rotor core.

In the annular groove 14, the oil is mainly blocked by the first sidewall 141 of the annular groove 14. The oil flowing out from the outlet end of the oil discharge port 13 may immediately contact the first sidewall 141 in case that the first distance is equal to the second distance, so that the oil flowing out from the outlet end of the oil discharge port 13 may contact the first sidewall 141 without passing through the bottom wall 143, enabling the oil to enter the annular groove 14 more smoothly, increasing stability of a flow of the oil, and improving an NVH (Noise Vibration and Harshness) problem of the motor.

In the present invention, the first sidewall 141 may be configured as an outward inclined sidewall or a straight wall in a direction from the first end face 11 toward the second end face 12 of the balancing disk 10, which is not limited by the present invention. That is, an angle between the first sidewall 141 and the bottom wall 143 of the annular groove 14 is not limited in the present invention. However, it is considered that the oil may be hold back in the rotor in case that the angle is less than 90 degrees, causing dead oil and affecting heat dissipation of the rotor. Based on this, referring to FIGS. 3 to 5 and 9, the bottom wall 143 is parallel to the first end face 11, and the angle between the first sidewall 141 and the bottom wall 143 is greater than or equal to 90 degrees. In case that the angle between the first sidewall 141 and the bottom wall 143 is greater than 90 degrees, movement of the oil will increase by a radial component after the oil enters the annular groove 14, and oil-trapping effect (i.e. oil-guiding effect) will be compromised. In case that the angle between the first sidewall 141 and the bottom wall 143 is equal to 90 degrees, the movement of the oil will not increase by a component and the oil-trapping effect is more ideal.

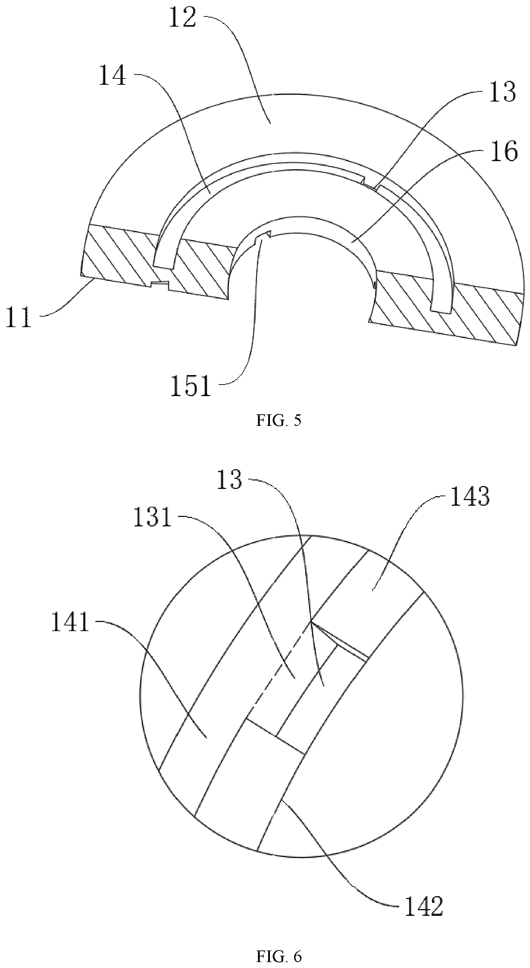

In order to improve the oil-trapping effect of the first sidewall 141 of the annular groove 14, optionally, as shown in FIGS. 4 and 5, in some embodiments of the present invention, the angle between the first sidewall 141 and the bottom wall 143 is equal to 90 degrees and a first projection of the first sidewall 141 on the first end face 11 is a circle. In other words, the angle between the first sidewall 141 and the bottom wall 143 of the annular groove 14 is 90 degrees, and the first sidewall 141 is also configured as a circular arc-shaped sidewall around the rotation axis 161 of the balancing disk 10. Such a design is beneficial to improving a smooth movement of the oil within the annular groove 14 and, therefore, to improving the oil-trapping effect of the first sidewall 141 of the annular groove 14, facilitating increased residence time of the oil in the annular groove 14 and reducing the scouring force of the oil acting on the stator of the motor. In this case, as shown in FIGS. 3 and 9, the first distance has a size of R1 and the second distance has a size of R2.

In the present invention, an angle between the second sidewall 142 and the bottom wall 143 is not limited. Optionally, as shown in FIGS. 4 and 8, in some embodiments of the present invention, the angle between the second sidewall 142 and the bottom wall 143 is equal to 90 degrees, and a second projection of the second sidewall 142 on the first end face 11 is a circle, where a center of the first projection may coincide with a center of the second projection. The angle between the second sidewall 142 and the bottom wall 143 is designed to be 90 degrees, which facilitates processing of the annular groove 14, and is beneficial to increasing the residence time of the oil in the annular groove 14, so that the oil is distributed more uniformly in an oil-trapping groove.

In the present invention, on the basis of ensuring structural strength of the balancing disk 10, referring to FIG. 4, a size of a depth h of the annular groove 14 (i.e., an axial size of the annular groove 14) may be increased as much as possible, because the larger the depth h is, the more uniformly the oil is distributed in the annular groove 14, and the more obvious the effect of reducing the flushing force is.

In order to further improve the oil-trapping effect of the balancing disk 10, optionally, referring to FIG. 6, the first projection of the first sidewall 141 on the first end face 11 is a circle, the third sidewall 131 of the oil discharge port 13 is an arc-shaped sidewall, a projection of the arc-shaped sidewall on the first end face 11 is an arc-shaped segment, and the third sidewall 131 is flush with the first sidewall 141 in the radial direction of the balancing disk 10. In other words, a radius of curvature of the arc-shaped segment is the same as a radius of curvature of the first projection. In this way, the oil flowing out of the oil discharge port 13 in a rotating state may be directly guided by the first sidewall 141 of the annular groove 14, and an additional radial component force may not be added, so that a better oil-trapping effect may be obtained.

To facilitate the oil discharge from the oil discharge port 13, the oil is prevented from accumulating in the oil discharge port 13. In the present invention, a caliber of the oil discharge port 13 gradually increases from an inlet end to the outlet end of the oil discharge port 13, i.e., the oil discharge port 13 is an opening flared toward the second end face 12.

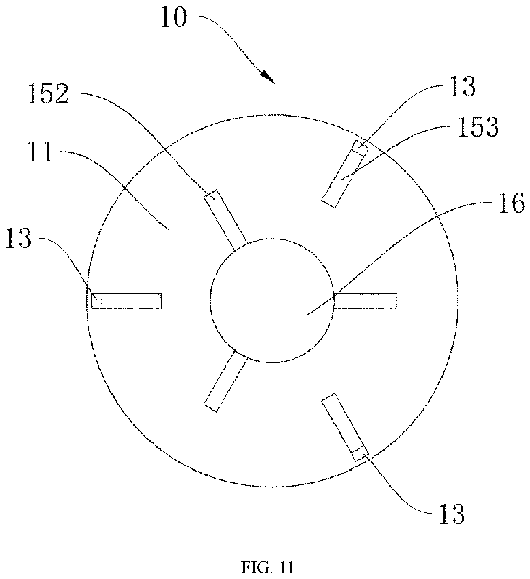

The number of the oil discharge ports 13 is not limited in the present invention. In order to improve oil discharge efficiency and effect, optionally, as shown in FIGS. 3 and 11, a plurality of oil discharge ports 13 is provided, and the plurality of oil discharge ports 13 is arranged at equal angular intervals in a circumferential direction around the rotation axis 161 of the balancing disk 10. In this way, a reasonable design of the number and position of the oil discharge ports 13 is beneficial to balance of oil injection of the balancing disk 10, further improving the NVH performance of the motor.

A position of the annular groove 14 in the radial direction of the balancing disk 10 is not limited in the present invention. Optionally, in one embodiment of the present invention, as shown in FIG. 3, the annular groove 14 is located in a middle of the balancing disk 10 in the radial direction of the balancing disk 10, and in another embodiment of the present invention, the annular groove 14 is located near an outer circumference (an outer circumference wall) of the balancing disk 10 in the radial direction of the balancing disk 10.

In the related art, the motor is often cooled by adopting a solution of a left-right cross circulation oil cooling or a non-cross circulation oil cooling (unilateral oil cooling). The solution of the left-right cross circulation oil cooling is that an oil channel is provided on a rotating shaft of the motor, the oil passing through the oil channel passes through oil paths formed by the balancing disk and a first end of the rotor core of the motor, then the cooling oil enters axial through holes (such as lightening holes) extending in an axial direction of the rotor core, flows to a second end from the first end of the rotor core, and finally is sprayed out through an oil spraying hole provided on the balancing disk at the second end, to flow to a stator winding of the motor, so that cooling of the whole rotor assembly is completed.

The solution of the unilateral oil cooling is that the oil channel is provided on the rotating shaft of the motor, the oil passing through the oil channel passes through the oil paths formed by the balancing disks on two sides of the motor and ends of the rotor core respectively, and after the rotor is cooled the oil is sprayed to the stator winding of the motor still from the balancing disk on a side from which the oil entered, so that the cooling of the whole rotor assembly is completed.

The balancing disk 10 provided by the present invention is suitable for both the solution of the left-right cross circulation oil cooling and the solution of the non-cross circulation oil cooling.

Regarding the solution of the left-right cross circulation oil cooling, as shown in FIGS. 1, 2 and 13, in one embodiment of the present invention, the balancing disk 10 is further provided with a first oil discharge groove 151 and a first mounting hole 16 configured for the rotating shaft of the motor to pass through, and a central axis of the first mounting hole 16 is the rotation axis 161 of the balancing disk 10. The first oil discharge groove 151 is located on the first end face 11 of the balancing disk 10 and extends in the radial direction of the balancing disk 10, an inner end of the first oil discharge groove 151 is communicated with the first mounting hole 16, and an outer end of the first oil discharge groove 151 is communicated with the axial through hole 21 located on the end face 22 of the rotor core.

It may be understood that the axial through hole 21 on the rotor core 20 here and hereinafter is a through hole connecting two opposite end faces of the rotor core 20. The axial through hole 21 may be a lightening hole of the rotor core 20, or may be a specially arranged through hole, which is not limited in the present invention.

Based on this, in case cooling is performed, referring to FIGS. 1 to 3 and 13, the cooling oil may enter a hollow part of the rotating shaft 30 in the axial direction of the motor and then enter between one of the balancing disks 10 of the rotor assembly 100 and a first end of the rotor core 20 through an oil hole 31 in a peripheral wall of the rotating shaft 30; then, the cooling oil may flow from a first end to a second end of the rotor core 20 through the first oil discharge groove 151 and the axial through hole 21 communicating with the first oil discharge groove 151, and be sprayed from the oil discharge port 13 and the annular groove 14 on the balancing disk 10 located at the second end of the rotor core 20, forming left-right cross oil cooling.

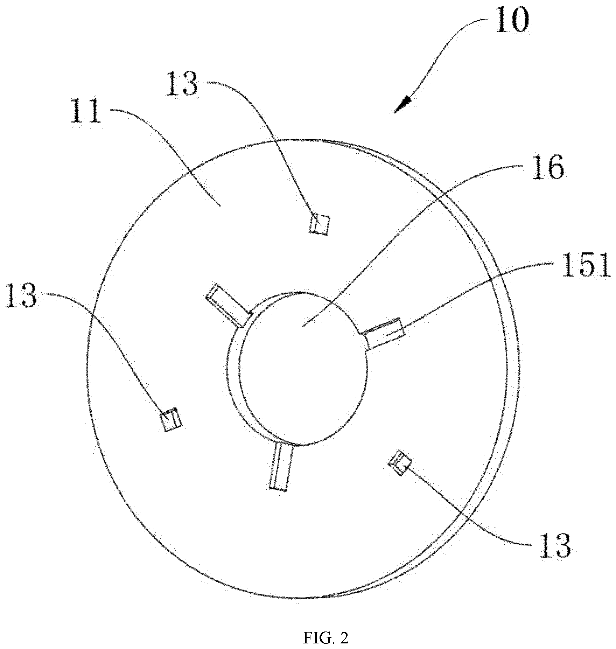

The number and position of the first oil discharge grooves 151 and the oil discharge ports 13 are not limited in the present invention. Optionally, as shown in FIGS. 1 and 2, in one embodiment of the present invention, a plurality of first oil discharge grooves 151 and a plurality of oil discharge ports 13 are provided in an equal number, the plurality of first oil discharge grooves 151 and the plurality of oil discharge ports 13 are arranged at equal angular intervals in the circumferential direction around the rotation axis 161, and one oil discharge port 13 is arranged between every two adjacent first oil discharge grooves 151. In this way, a reasonable design of the number and position of the first oil discharge grooves 151 and the oil discharge ports 13 is beneficial to balance of oil injection of the rotor assembly 100, and to dynamically balance the motor by the balancing disk 10, further improving the NVH performance of the motor.

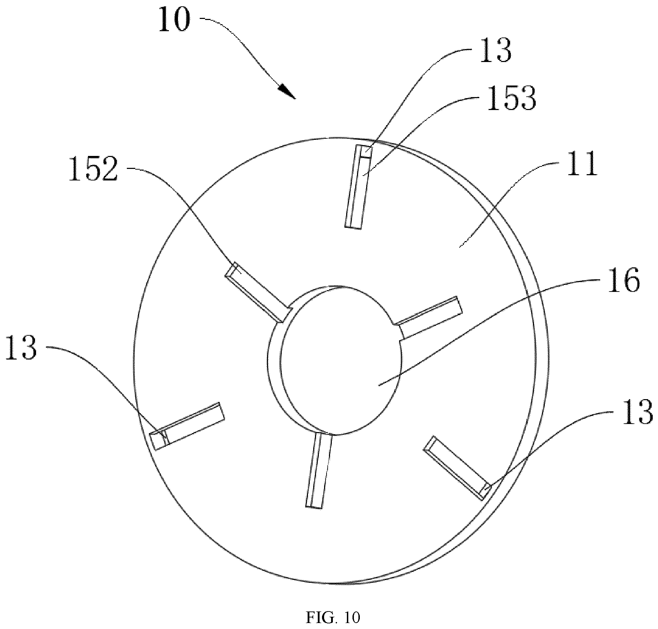

Regarding the solution of the left-right cross circulation oil cooling, as shown in FIGS. 10 and 11, in another embodiment of the present invention, the balancing disk 10 is further provided with a second oil discharge groove 152, a third oil discharge groove 153 and the first mounting hole 16 configured for the rotating shaft 30 of the motor to pass through. The second oil discharge groove 152 is located on the first end face 11 of the balancing disk 10 and extends in the radial direction of the balancing disk 10, an inner end of the second oil discharge groove 152 is communicated with the first mounting hole 16, and an outer end of the second oil discharge groove 152 is communicated with the axial through hole 21 located on the end face 22 of the rotor core. The third oil discharge groove 153 is located on the first end face 11 of the balancing disk 10 and extends in the radial direction of the balancing disk 10, an inner end of the third oil discharge groove 153 is communicated with another axial through hole 21 located on the end face 22 of the rotor core, and an outer end of the third oil discharge groove 153 is communicated with the inlet end of the oil discharge port 13.

Based on this, in case cooling is performed, referring to FIGS. 10, 11 and 13, the cooling oil may enter the hollow part of the rotating shaft 30 in the axial direction of the motor and then enter between one of the balancing disks 10 of the rotor assembly 100 and the first end of the rotor core 20 through the oil hole 31 in the peripheral wall of the rotating shaft 30; thereafter, the cooling oil may flow from the first end to the second end of the rotor core 20 through the second oil discharge groove 152 and the axial through hole 21 communicating with the second oil discharge groove 152, and flow to the third oil discharge groove 153 on the balancing disk 10 located at the other end of the rotor core 20, and then be sprayed from the oil discharge port 13 and the annular groove 14 communicating with the third oil discharge groove 153, forming the left-right cross oil cooling.

The number and position of the second oil discharge grooves 152, the third oil discharge grooves 153 and the oil discharge ports 13 are not limited in the present invention. Optionally, as shown in FIGS. 10 and 11, in one embodiment of the present invention, a plurality of second oil discharge grooves 152, a plurality of third oil discharge grooves 153 and a plurality of oil discharge ports 13 are provided in an equal number, and the plurality of third oil discharge grooves 153 are in one-to-one correspondence with the plurality of oil discharge ports 13. The plurality of second oil discharge grooves 152 and the plurality of third oil discharge grooves 153 are arranged at equal angular intervals in the circumferential direction around the rotation axis 161, and one second oil discharge groove 152 is arranged between every two adjacent third oil discharge grooves 153. In this way, a reasonable design of the number and position of the second oil discharge grooves 152, the third oil discharge grooves 153 and the oil discharge ports 13 is beneficial to the balance of the oil injection of the rotor assembly 100, and to dynamically balance the motor by the balancing disk 10, further improving the NVH performance of the motor.

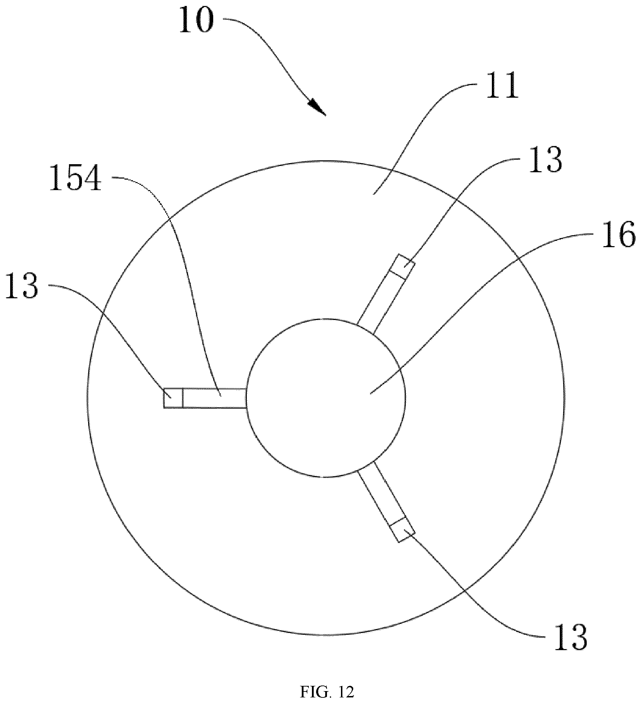

Regarding the solution of the non-cross circulation oil cooling, optionally, referring to FIG. 12, in one embodiment of the present invention, the balancing disk 10 is further provided with a fourth oil discharge groove 154 and the first mounting hole 16 configured for the rotating shaft 30 of the motor to pass through. The fourth oil discharge groove is located on the first end face 11 of the balancing disk 10 and extends in the radial direction of the balancing disk 10, an inner end of the fourth oil discharge groove 154 is communicated with the first mounting hole 16, and an outer end of the fourth oil discharge groove 154 is communicated with the inlet end of the oil discharge port 13.

In case that the motor is cooled, the cooling oil enters oil discharge channels formed by the two balancing disks 10 and the rotor core 20 respectively from the oil channel on the rotating shaft 30 through the oil hole 31, and the cooling oil may be discharged from the fourth oil discharge groove 154, the oil discharge port 13 and the annular groove 14 on the balancing disks 10.

According to another aspect of the present invention, the rotor assembly 100 is provided. The rotor assembly 100 includes the rotor core 20, the rotating shaft 30, and two balancing disks 10 as described above. The two balancing disks 10 and the rotor core 20 are fitted over the rotating shaft 30, and the two balancing disks 10 are respectively arranged at two ends of the rotor core 20 in an axial direction.

The rotating shaft 30 penetrates through the first mounting hole 16 on the balancing disk 10 and a second mounting hole on the rotor core 20. The rotating shaft 30 may be hollow, and oil hole 31 is through the sidewall of the rotating shaft 30. In case the cooling is performed, the cooling oil may enter the hollow part of the rotating shaft 30 in the axial direction of the motor, and then enter the oil channel configured by the balancing disk 10 and the rotor core 20 of the rotor assembly 100 through the oil hole 31 on the peripheral wall of the rotating shaft 30.

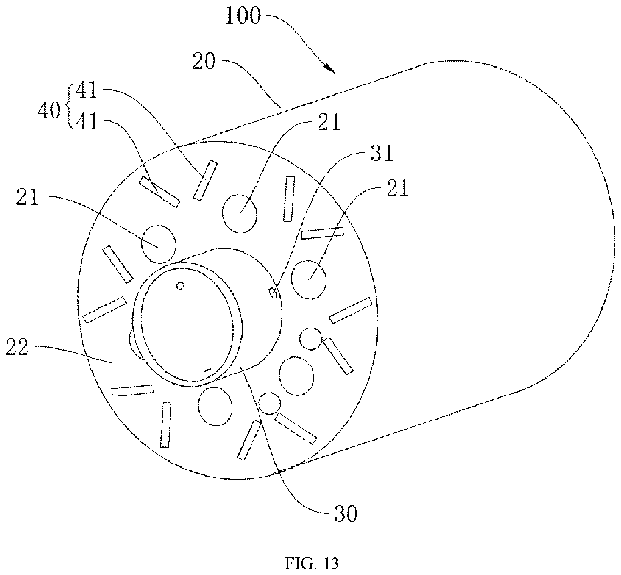

As shown in FIG. 13, the rotor assembly 100 may include a plurality of magnet units 40, two corresponding magnet units 40 are configured as a magnetic pole pair, and the plurality of magnet units 40 is arranged on the end face 22 of the rotor core at equal intervals around a central axis of the second mounting hole.

As an alternative embodiment, referring to FIG. 13, the rotor of the motor has 6 magnet units 40, a number of the magnetic pole pairs is 3, and the 6 magnet units 40 are arranged at equal intervals in the circumferential direction around the central axis of the second mounting hole.

The rotor core 20 and the plurality of magnet units 40 are configured as the rotor of the motor, and the rotor core 20 has a magnet groove that is configured to mount a magnet 41.

According to a third aspect of the present invention, there is provided the motor including the rotor assembly 100 as described above.

The rotor assembly 100 provided in the present invention may be a high-speed rotor assembly 100, that is, the motor may be a high-speed motor. An outer sidewall (i.e., an outermost sidewall in the radial direction of the balancing disk 10) of oil discharge port 13 has a linear velocity greater than or equal to 120m/s in case that the balancing disk 10 rotates. In this way, a problem of damage to the stator of the motor due to increase of the rotating speed of the motor is solved by designing the balancing disk 10, and therefore the rotating speed of the motor may be increased on the premise of protecting the stator, to meet use conditions required for high rotating speed of the motor.

According to a fourth aspect of the present invention, there is provided a vehicle including the motor as described above. The vehicle may be a hybrid vehicle or a pure-electric new-energy vehicle, and the present invention is not limited thereto.

## Claims

1. A balancing disk (10) for a motor, comprising:
an oil discharge port (13); and
a first end face (11) and a second end face (12) opposite to each other,
wherein the first end face (11) is configured to fit on an end face (22) of a rotor core (20), the second end face (12) has an annular groove (14), and the oil discharge port (13) is communicated with the first end face (11) and the annular groove (14), to enable oil flowing out of the oil discharge port (13) to be discharged through the annular groove (14),
**characterized in that** a size of the oil discharge port (13) gradually increases from an inlet end to an outlet end of the oil discharge port (13).

2. The balancing disk (10) of claim 1, wherein
the annular groove (14) is arranged around a rotation axis (161) of the balancing disk (10);
the annular groove (14) has a first sidewall (141) and a second sidewall (142) spaced apart from each other, and a bottom wall (143) located between the first sidewall (141) and the second sidewall (142), the first sidewall (141) is located outside the second sidewall (142) in a radial direction of the balancing disk (10), and a radial distance between an end of the first sidewall (141) close to the bottom wall (143) and the rotation axis (161) is a first distance;
an outlet end of the oil discharge port (13) extends to the bottom wall (143), and a radial distance between a third sidewall (131) located at an outermost side in the radial direction of the balancing disk (10) in the oil discharge port (13) and the rotation axis (161) is a second distance; and
the first distance is greater than or equal to the second distance.

3. The balancing disk (10) of claim 2, wherein the bottom wall (143) is parallel to the first end face (11); and
an angle between the first sidewall (141) and the bottom wall (143) is greater than or equal to 90 degrees.

4. The balancing disk (10) of claim 3, wherein a first projection of the first sidewall (141) on the first end face (11) is a circle, and the third sidewall (131) in the oil discharge port (13) is an arc-shaped sidewall; and
the third sidewall (131) is flush with the first sidewall (141) in the radial direction of the balancing disk (10).

5. The balancing disk (10) of any one of claims 1 to 4, further comprising a plurality of oil discharge ports (13), wherein the plurality of oil discharge ports (13) is arranged at equal angular intervals in a circumferential direction around a rotation axis (161) of the balancing disk (10).

6. The balancing disk (10) of any one of claims 1 to 5, wherein the annular groove (14) is located at a middle of the balancing disk (10) in a radial direction of the balancing disk (10), or the annular groove (14) is located near an outer circumference of the balancing disk (10) in the radial direction of the balancing disk (10).

7. The balancing disk (10) of any one of claims 1 to 6, further comprising a first oil discharge groove (151) and a first mounting hole (16) configured for a rotating shaft (30) of the motor to pass through,
wherein a central axis of the first mounting hole (16) is the rotation axis (161) of the balancing disk (10); and
the first oil discharge groove (151) is located on the first end face (11) of the balancing disk (10) and extends in the radial direction of the balancing disk (10), the first oil discharge groove (151) has an inner end communicated with the first mounting hole (16), and an outer end configured to be communicated with an axial through hole (21) located on the end face (22) of the rotor core (20);
wherein preferably, a plurality of first oil discharge grooves (151) and a plurality of oil discharge ports (13) are provided in an equal number, the plurality of first oil discharge grooves (151) and the plurality of oil discharge ports (13) are arranged at equal angular intervals in the circumferential direction around the rotation axis (161), and one oil discharge port (13) is arranged between every two adjacent first oil discharge grooves (151).

8. The balancing disk (10) of any one of claims 1 to 6, further comprising a second oil discharge groove (152), a third oil discharge groove (153) and a first mounting hole (16) configured for a rotating shaft (30) of the motor to pass through,
wherein a central axis of the first mounting hole (16) is the rotation axis (161) of the balancing disk (10);
the second oil discharge groove (152) is located on the first end face (11) of the balancing disk (10) and extends in the radial direction of the balancing disk (10), the second oil discharge groove (152) has an inner end communicated with the first mounting hole (16), and an outer end configured to be communicated with an axial through hole (21) located on the end face (22) of the rotor core (20); and
the third oil discharge groove (153) is located on the first end face (11) of the balancing disk (10) and extends in the radial direction of the balancing disk (10), the third oil discharge groove (153) has an inner end configured to be communicated with another axial through hole (21) located on the end face (22) of the rotor core (20), and an outer end communicated with the inlet end of the oil discharge port (13).

9. The balancing disk (10) of claim 8, wherein a plurality of second oil discharge grooves (152), a plurality of third oil discharge grooves (153) and a plurality of oil discharge ports (13) are provided in an equal number, and the plurality of third oil discharge grooves (153) is in one-to-one correspondence with the plurality of oil discharge ports (13) in terms of position; and
the plurality of second oil discharge grooves (152) and the plurality of third oil discharge grooves (153) are arranged at equal angular intervals in the circumferential direction around the rotation axis (161), and one second oil discharge groove (152) is arranged between every two adjacent third oil discharge grooves (153).

10. The balancing disk (10) of any one of claims 1 to 6, further comprising a fourth oil discharge groove (154) and a first mounting hole (16) configured for a rotating shaft (30) of the motor to pass through,
wherein a central axis of the first mounting hole (16) is the rotation axis (161) of the balancing disk (10); and
the fourth oil discharge groove (154) is located on the first end face (11) of the balancing disk (10) and extends in the radial direction of the balancing disk (10), the fourth oil discharge groove (154) has an inner end communicated with the first mounting hole (16), and an outer end communicated with the inlet end of the oil discharge port (13).

11. A rotor assembly (100), comprising:
a rotor core (20),
a rotating shaft (30), and
two balancing disks (10) according to any one of claims 1 to 10,
wherein the two balancing disks (10) and the rotor core (20) are fitted over the rotating shaft (30), and the two balancing disks (10) are respectively arranged at two ends of the rotor core (20) in an axial direction.

12. The rotor assembly (100) of claim 11, wherein an outer sidewall of the oil discharge port (13) has a linear velocity greater than or equal to 120m/s during rotation of the balancing disk (10).

13. A motor, comprising a rotor assembly (100) according to claim 11 or 12.

14. A vehicle, comprising a motor according to claim 13.

## Patentansprüche

1. Eine Ausgleichsscheibe (10) für einen Motor, die folgende Merkmale aufweist:
eine Ölauslassöffnung (13); und
eine erste Endfläche (11) und eine zweite Endfläche (12), die einander gegenüberliegen,
wobei die erste Endfläche (11) dazu konfiguriert ist, auf eine Endfläche (22) eines Rotorkerns (20) zu passen, die zweite Endfläche (12) eine ringförmige Rille (14) aufweist und die Ölauslassöffnung (13) mit der ersten Endfläche (11) und der ringförmigen Rille (14) in Verbindung steht, um zu ermöglichen, dass Öl, das aus der Ölauslassöffnung (13) fließt, durch die ringförmige Rille (14) ausgelassen wird,
**dadurch gekennzeichnet, dass** eine Größe der Ölauslassöffnung (13) von einem Einlassende zu einem Auslassende der Ölauslassöffnung (13) allmählich zunimmt.

2. Die Ausgleichsscheibe (10) gemäß Anspruch 1, wobei
die ringförmige Rille (14) um eine Drehachse (161) der Ausgleichsscheibe (10) angeordnet ist;
die ringförmige Rille (14) eine erste Seitenwand (141) und eine zweite Seitenwand (142), die voneinander beabstandet sind, und eine Bodenwand (143), aufweist, die sich zwischen der ersten Seitenwand (141) und der zweiten Seitenwand (142) befindet, die erste Seitenwand (141) sich in einer radialen Richtung der Ausgleichsscheibe (10) außerhalb der zweiten Seitenwand (142) befindet und ein radialer Abstand zwischen einem Ende der ersten Seitenwand (141) nahe der Bodenwand (143) und der Drehachse (161) ein erster Abstand ist;
ein Auslassende der Ölauslassöffnung (13) sich zu der Bodenwand (143) erstreckt und ein radialer Abstand zwischen einer dritten Seitenwand (131), die sich an einer äußersten Seite in der radialen Richtung der Ausgleichsscheibe (10) in der Ölauslassöffnung (13) befindet, und der Drehachse (161) ein zweiter Abstand ist; und
der erste Abstand größer als oder gleich dem zweiten Abstand ist.

3. Die Ausgleichsscheibe (10) gemäß Anspruch 2, wobei die Bodenwand (143) parallel zu der ersten Endfläche (11) ist; und
ein Winkel zwischen der ersten Seitenwand (141) und der Bodenwand (143) größer als oder gleich 90 Grad ist.

4. Die Ausgleichsscheibe (10) gemäß Anspruch 3, wobei ein erster Vorsprung der ersten Seitenwand (141) an der ersten Endfläche (11) ein Kreis ist und die dritte Seitenwand (131) in der Ölauslassöffnung (13) eine bogenförmige Seitenwand ist; und
die dritte Seitenwand (131) in der radialen Richtung der Ausgleichsscheibe (10) mit der ersten Seitenwand (141) bündig ist.

5. Die Ausgleichsscheibe (10) gemäß einem der Ansprüche 1 bis 4, die ferner eine Mehrzahl von Ölauslassöffnungen (13) aufweist, wobei die Mehrzahl von Ölauslassöffnungen (13) in einer Umfangsrichtung um eine Drehachse (161) der Ausgleichsscheibe (10) in gleichen Winkelintervallen angeordnet ist.

6. Die Ausgleichsscheibe (10) gemäß einem der Ansprüche 1 bis 5, wobei sich die ringförmige Rille (14) in einer radialen Richtung der Ausgleichsscheibe (10) in einer Mitte der Ausgleichsscheibe (10) befindet oder sich die ringförmige Rille (14) in der radialen Richtung der Ausgleichsscheibe (10) in der Nähe eines Außenumfangs der Ausgleichsscheibe (10) befindet.

7. Die Ausgleichsscheibe (10) gemäß einem der Ansprüche 1 bis 6, die ferner eine erste Ölauslassrille (151) und ein erstes Befestigungsloch (16) aufweist, das konfiguriert ist, damit eine Drehwelle (30) des Motors durch dasselbe verläuft,
wobei eine Mittelachse des ersten Befestigungslochs (16) die Drehachse (161) der Ausgleichsscheibe (10) ist; und
sich die erste Ölauslassrille (151) an der ersten Endfläche (11) der Ausgleichsscheibe (10) befindet und sich in der radialen Richtung der Ausgleichsscheibe (10) erstreckt, die erste Ölauslassrille (151) ein inneres Ende, das mit dem ersten Befestigungsloch (16) in Verbindung steht, und ein äußeres Ende aufweist, das dazu konfiguriert ist, mit einem axialen Durchgangsloch (21), das sich an der Endfläche (22) des Rotorkerns (20) befindet, in Verbindung zu stehen;
wobei vorzugsweise eine Mehrzahl von ersten Ölauslassrillen (151) und eine Mehrzahl von Ölauslassöffnungen (13) in einer gleichen Anzahl vorgesehen sind, die Mehrzahl von ersten Ölauslassrillen (151) und die Mehrzahl von Ölauslassöffnungen (13) in gleichen Winkelintervallen in der Umfangsrichtung um die Drehachse (161) angeordnet sind und eine Ölauslassöffnung (13) zwischen jeweils zwei benachbarten ersten Ölauslassrillen (151) angeordnet ist.

8. Die Ausgleichsscheibe (10) gemäß einem der Ansprüche 1 bis 6, die ferner eine zweite Ölauslassrille (152), eine dritte Ölauslassrille (153) und ein erstes Befestigungsloch (16) aufweist, das konfiguriert ist, damit eine Drehwelle (30) des Motors durch dasselbe verläuft,
wobei eine Mittelachse des ersten Befestigungslochs (16) die Drehachse (161) der Ausgleichsscheibe (10) ist;
sich die zweite Ölauslassrille (152) an der ersten Endfläche (11) der Ausgleichsscheibe (10) befindet und sich in der radialen Richtung der Ausgleichsscheibe (10) erstreckt, die zweite Ölauslassrille (152) ein inneres Ende, das mit dem ersten Befestigungsloch (16) in Verbindung steht, und ein äußeres Ende aufweist, das dazu konfiguriert ist, mit einem axialen Durchgangsloch (21), das sich an der Endfläche (22) des Rotorkerns (20) befindet, in Verbindung zu stehen; und
sich die dritte Ölauslassrille (153) an der ersten Endfläche (11) der Ausgleichsscheibe (10) befindet und sich in der radialen Richtung der Ausgleichsscheibe (10) erstreckt, die dritte Ölauslassrille (153) ein inneres Ende, das dazu konfiguriert ist, mit einem anderen axialen Durchgangsloch (21), das sich an der Endfläche (22) des Rotorkerns (20) befindet, in Verbindung zu stehen, und ein äußeres Ende aufweist, das mit dem Einlassende der Ölauslassöffnung (13) in Verbindung steht.

9. Die Ausgleichsscheibe (10) gemäß Anspruch 8, wobei eine Mehrzahl von zweiten Ölauslassrillen (152), eine Mehrzahl von dritten Ölauslassrillen (153) und eine Mehrzahl von Ölauslassöffnungen (13) in einer gleichen Anzahl vorgesehen sind und die Mehrzahl von dritten Ölauslassrillen (153) hinsichtlich der Position in einer Eins-zu-Eins-Entsprechung mit der Mehrzahl von Ölauslassöffnungen (13) ist; und
die Mehrzahl von zweiten Ölauslassrillen (152) und die Mehrzahl von dritten Ölauslassrillen (153) in der Umfangsrichtung in gleichen Winkelintervallen um die Drehachse (161) angeordnet sind und eine zweite Ölauslassrille (152) zwischen jeweils zwei benachbarten dritten Ölauslassrillen (153) angeordnet ist.

10. Die Ausgleichsscheibe (10) gemäß einem der Ansprüche 1 bis 6, die ferner eine vierte Ölauslassrille (154) und ein erstes Befestigungsloch (16) aufweist, das konfiguriert ist, damit eine Drehwelle (30) des Motors durch dasselbe verläuft,
wobei eine Mittelachse des ersten Befestigungslochs (16) die Drehachse (161) der Ausgleichsscheibe (10) ist; und
sich die vierte Ölauslassrille (154) an der ersten Endfläche (11) der Ausgleichsscheibe (10) befindet und sich in der radialen Richtung der Ausgleichsscheibe (10) erstreckt, die vierte Ölauslassrille (154) ein inneres Ende, das mit dem ersten Befestigungsloch (16) in Verbindung steht, und ein äußeres Ende aufweist, das mit dem Einlassende der Ölauslassöffnung (13) in Verbindung steht.

11. Eine Rotoranordnung (100), die folgende Merkmale aufweist:
einen Rotorkern (20),
eine Drehwelle (30), und
zwei Ausgleichsscheiben (10) gemäß einem der Ansprüche 1 bis 10,
wobei die zwei Ausgleichsscheiben (10) und der Rotorkern (20) über die Drehwelle (30) gepasst sind und die zwei Ausgleichsscheiben (10) in einer axialen Richtung jeweils an zwei Enden des Rotorkerns (20) angeordnet sind.

12. Die Rotoranordnung (100) gemäß Anspruch 11, wobei eine äußere Seitenwand der Ölauslassöffnung (13) während der Drehung der Ausgleichsscheibe (10) eine Lineargeschwindigkeit größer als oder gleich 120 m/s aufweist.

13. Ein Motor, der eine Rotoranordnung (100) gemäß Anspruch 11 oder 12 aufweist.

14. Ein Fahrzeug, das einen Motor gemäß Anspruch 13 aufweist.

## Revendications

1. Disque d'équilibrage (10) pour un moteur, comprenant :
un orifice de décharge d'huile (13) ; et
une première face d'extrémité (11) et une deuxième face d'extrémité (12) opposées l'une à l'autre,
dans lequel la première face d'extrémité (11) est configurée pour s'adapter sur une face d'extrémité (22) d'un noyau de rotor (20), la deuxième face d'extrémité (12) comporte une rainure annulaire (14), et l'orifice de décharge d'huile (13) communique avec la première face d'extrémité (11) et la rainure annulaire (14), afin de permettre à l'huile s'écoulant de l'orifice de décharge d'huile (13) d'être évacuée à travers la rainure annulaire (14),
**caractérisé en ce que** la taille de l'orifice de décharge d'huile (13) augmente progressivement depuis l'extrémité d'entrée vers l'extrémité de sortie de l'orifice de décharge d'huile (13).

2. Disque d'équilibrage (10) selon la revendication 1, dans lequel
la rainure annulaire (14) est disposée autour d'un axe de rotation (161) du disque d'équilibrage (10) ;
la rainure annulaire (14) comporte une première paroi latérale (141) et une deuxième paroi latérale (142) espacées l'une de l'autre, et une paroi inférieure (143) située entre la première paroi latérale (141) et la deuxième paroi latérale (142), la première paroi latérale (141) est située à l'extérieur de la deuxième paroi latérale (142) dans une direction radiale du disque d'équilibrage (10), et une distance radiale entre une extrémité de la première paroi latérale (141) proche de la paroi inférieure (143) et l'axe de rotation (161) est une première distance ;
une extrémité de sortie de l'orifice de décharge d'huile (13) se prolonge jusqu'à la paroi inférieure (143), et une distance radiale entre une troisième paroi latérale (131) située sur un côté le plus extérieur dans la direction radiale du disque d'équilibrage (10) dans l'orifice de décharge d'huile (13) et l'axe de rotation (161) est une deuxième distance ; et
la première distance est supérieure ou égale à la deuxième distance.

3. Disque d'équilibrage (10) selon la revendication 2, dans lequel la paroi inférieure (143) est parallèle à la première face d'extrémité (11) ; et
un angle entre la première paroi latérale (141) et la paroi inférieure (143) est supérieur ou égal à 90 degrés.

4. Disque d'équilibrage (10) selon la revendication 3, dans lequel une première saillie de la première paroi latérale (141) sur la première face d'extrémité (11) est un cercle, et la troisième paroi latérale (131) dans l'orifice de décharge d'huile (13) est une paroi latérale en forme d'arc ; et
la troisième paroi latérale (131) est alignée avec la première paroi latérale (141) dans la direction radiale du disque d'équilibrage (10).

5. Disque d'équilibrage (10) selon l'une quelconque des revendications 1 à 4, comprenant en outre une pluralité d'orifices de décharge d'huile (13), dans lequel la pluralité d'orifices de décharge d'huile (13) est disposée à intervalles angulaires égaux dans une direction circonférentielle autour d'un axe de rotation (161) du disque d'équilibrage (10).

6. Disque d'équilibrage (10) selon l'une quelconque des revendications 1 à 5, dans lequel la rainure annulaire (14) est située dans un milieu du disque d'équilibrage (10) dans une direction radiale du disque d'équilibrage (10), ou la rainure annulaire (14) est située près d'une circonférence extérieure du disque d'équilibrage (10) dans la direction radiale du disque d'équilibrage (10).

7. Disque d'équilibrage (10) selon l'une quelconque des revendications 1 à 6, comprenant en outre une première rainure de décharge d'huile (151) et un premier trou de montage (16) configuré pour permettre le passage d'un arbre rotatif (30) du moteur,
dans lequel l'axe central du premier trou de montage (16) est l'axe de rotation (161) du disque d'équilibrage (10) ; et
la première rainure de décharge d'huile (151) est située sur la première face d'extrémité (11) du disque d'équilibrage (10) et se prolonge dans la direction radiale du disque d'équilibrage (10), la première rainure de décharge d'huile (151) comporte une extrémité intérieure communiquant avec le premier trou de montage (16) et une extrémité extérieure configurée pour communiquer avec un trou traversant axial (21) situé sur la face d'extrémité (22) du noyau de rotor (20);
dans lequel, de préférence, une pluralité de premières rainures de décharge d'huile (151) et une pluralité d'orifices de décharge d'huile (13) sont fournis en nombre égal, la pluralité de premières rainures de décharge d'huile (151) et la pluralité d'orifices de décharge d'huile (13) sont disposés à intervalles angulaires égaux dans la direction circonférentielle autour de l'axe de rotation (161), et un orifice de décharge d'huile (13) est disposé entre chaque paire de premières rainures de décharge d'huile (151) adjacentes.

8. Disque d'équilibrage (10) selon l'une quelconque des revendications 1 à 6, comprenant en outre une deuxième rainure de décharge d'huile (152), une troisième rainure de décharge d'huile (153) et un premier trou de montage (16) configuré pour permettre le passage d'un arbre rotatif (30) du moteur,
dans lequel un axe central du premier trou de montage (16) est l'axe de rotation (161) du disque d'équilibrage (10) ;
la deuxième rainure de décharge d'huile (152) est située sur la première face d'extrémité (11) du disque d'équilibrage (10) et se prolonge dans la direction radiale du disque d'équilibrage (10), la deuxième rainure de décharge d'huile (152) comporte une extrémité intérieure communiquant avec le premier trou de montage (16) et une extrémité extérieure configurée pour communiquer avec un trou traversant axial (21) situé sur la face d'extrémité (22) du noyau de rotor (20); et
la troisième rainure de décharge d'huile (153) est située sur la première face d'extrémité (11) du disque d'équilibrage (10) et se prolonge dans la direction radiale du disque d'équilibrage (10), la troisième rainure de décharge d'huile (153) comporte une extrémité intérieure configurée pour communiquer avec un autre trou traversant axial (21) situé sur la face d'extrémité (22) du noyau de rotor (20), et une extrémité extérieure communiquant avec l'extrémité d'entrée de l'orifice de décharge d'huile (13).

9. Disque d'équilibrage (10) selon la revendication 8, dans lequel une pluralité de deuxièmes rainures de décharge d'huile (152), une pluralité de troisièmes rainures de décharge d'huile (153) et une pluralité d'orifices de décharge d'huile (13) sont fournis en nombre égal, et la pluralité de troisièmes rainures de décharge d'huile (153) correspond de manière biunivoque à la pluralité d'orifices de décharge d'huile (13) en termes de position ; et
la pluralité de deuxièmes rainures de décharge d'huile (152) et la pluralité de troisièmes rainures de décharge d'huile (153) sont disposées à intervalles angulaires égaux dans la direction circonférentielle autour de l'axe de rotation (161), et une deuxième rainure de décharge d'huile (152) est disposée entre chaque paire de troisièmes rainures de décharge d'huile (153) adjacentes.

10. Disque d'équilibrage (10) selon l'une quelconque des revendications 1 à 6, comprenant en outre une quatrième rainure de décharge d'huile (154) et un premier trou de montage (16) configuré pour permettre le passage d'un arbre rotatif (30) du moteur,
dans lequel un axe central du premier trou de montage (16) est l'axe de rotation (161) du disque d'équilibrage (10) ; et
la quatrième rainure de décharge d'huile (154) est située sur la première face d'extrémité (11) du disque d'équilibrage (10) et se prolonge dans la direction radiale du disque d'équilibrage (10), la quatrième rainure de décharge d'huile (154) comporte une extrémité intérieure communiquant avec le premier trou de montage (16) et une extrémité extérieure communiquant avec l'extrémité d'entrée de l'orifice de décharge d'huile (13).

11. Ensemble rotor (100), comprenant :
un noyau de rotor (20),
un arbre rotatif (30), et
deux disques d'équilibrage (10) selon l'une quelconque des revendications 1 à 10,
dans lequel les deux disques d'équilibrage (10) et le noyau de rotor (20) sont montés sur l'arbre rotatif (30), et les deux disques d'équilibrage (10) sont respectivement disposés aux deux extrémités du noyau de rotor (20) dans une direction axiale.

12. Ensemble rotor (100) selon la revendication 11, dans lequel une paroi latérale extérieure de l'orifice de décharge d'huile (13) présente une vitesse linéaire supérieure ou égale à 120 m/s pendant la rotation du disque d'équilibrage (10).

13. Moteur comprenant un ensemble rotor (100) selon la revendication 11 ou 12.

14. Véhicule comprenant un moteur, selon la revendication 13.
